# EUROPEAN PATENT APPLICATION

(11) **EP 4 628 412 A1**
(43) Date of publication of application: **08.10.2025**
(21) Application number: 24168217.8
(22) Date of filing: 03.04.2024
(51) Int. Cl.: B65B 3/00, B29C 65/00, B29C 65/08, B65B 9/10, B65B 9/13, B65B 9/20, B65B 51/22, B65B 55/02, B65B 55/24, B65B 61/18

(54) **FILLING MACHINE FOR FILLING POURABLE FOOD PRODUCTS INTO PACKAGE BODIES MADE FROM PACKAGE SLEEVES CLOSED AT THE BOTTOM AND METHOD FOR EXTRACTING CARDBOARD FIBERS OR DUST PARTICLES FROM THE OPEN CUT EDGES OF PACKAGE SLEEVES USED IN SUCH A MACHINE**

(71) Applicant: SIG Services AG, 8212 Neuhausen am Rheinfall (CH)
(72) Inventor: Weber, Daniel, 8212 Neuhausen am Rheinfall (DE); Backes, Martin, 52441 Linnich (DE); Barej, Martin, 52441 Linnich (DE); Beckers, Jens, 52441 Linnich (DE); Breitmar, Felix, 52441 Linnich (DE); Fahnenschreiber, Dominik, 52441 Linnich (DE); Langen, Christopher, Thiemo, 52441 Linnich (DE); Patzer, Thomas, 52441 Linnich (DE); Marten, Detlef, 52441 Linnich (DE); Roggenkamp, Dorothee, 52441 Linnich (DE)
(74) Representative: Cohausz & Florack

(57) **Abstract**

Illustrated and described is a filling machine (20) for filling pourable food products into package sleeves (10) closed at the bottom or packages (P), comprising a transport device (26) for conveying the package sleeves (10) and package bodies (16) along a transport direction, a sterilization station (30), a bottom sealing station (34), a filling station (35) with filling nozzles (36) for filling pourable food products into the package bodies (16), and a top sealing station (37), and, optionally, a spout application station (22) for applying spout elements (S) onto the package sleeves (10),wherein the bottom sealing station (34) and/or the top sealing station (37) and /or the spout application station (22) comprise ultrasonic welding units each having at least an anvil (42) and a sonotrode (43) or, if applicable, at least an anvil (53) and a sonotrode (55). In order to prevent cardboard fibers or dust particles from the open cut edges (OCEs) of the package sleeves (10) being swirled around and distributed in the filling machine (20) by the vibrations during ultrasonic sealing, the filling machine (20) further comprises an extraction system with at least one or more dust suction units for extracting cardboard fibers or dust particles from open cut edges (OCEs) of the package sleeves (10) during ultrasonic welding of the bottom seam and the gable seam, and in that each dust suction unit comprises a suction nozzle (44). Furthermore, methods for extracting cardboard fibers or dust particles from the open cut edges (OCE) of package sleeves (10) in a filling machine (20) are described.

## Description

The invention relates to a filling machine for filling pourable food products into package bodies made from package sleeves closed at the bottom, comprising:
- a transport device for conveying the package sleeves and package bodies along a transport direction,
- a sterilization station,
- a bottom sealing station,
- a filling station with filling nozzles for filling pourable food products into the package bodies, and
- a top sealing station,
wherein the bottom sealing station and/or the top sealing station may comprise ultrasonic welding units each having at least an anvil and a sonotrode,

Such a filling machine is known from WO 2023/016693 A1.

Moreover, the invention relates to a method for extracting cardboard fibers or dust particles from the open cut edges of package sleeves in such a filling machine according to claim 13 or claim 14.

It has been found that, due to the vibrations during ultrasonic sealing of the package bottom or top, or, if applicable, a spout element, cardboard dust particles can be whirled up from the open cut edges of package sleeves and, as a potential source of non-sterile packs, enter sensitive areas of the filling machine in question or, particularly, into the actual aseptic filling area.

It is therefore an object of the invention to modify the known filling machine and the respective method to prevent cardboard dust particles from the open cut edges of the package sleeves being swirled around and distributed in the filling machine by the vibrations during ultrasonic sealing. This includes all the open cut edges of the package sleeves, i.e., the bottom and top edges. It is also desirable to reliably remove cardboard fibers or dust particles from the filling machine.

For a filling machine according to the preamble of claim 1, the aforesaid objects are solved in that the filling machine further comprises an extraction system with at least one or more dust suction units for extracting cardboard fibers or dust particles from open cut edges of the package sleeves during ultrasonic welding of the bottom seam and the top seam, and in that each dust suction unit comprises a suction nozzle.

Alternatively, if the filling machine comprises a spout application station for applying spout elements onto the package sleeves by ultrasonic welding, the aforesaid objects are solved in that the filling machine further comprises an extraction system with at least one or more dust suction units for extracting cardboard fibers or dust particles from open cut edges of the package sleeves and/or package bodies during ultrasonic welding of the spout elements, wherein the spout application station comprises ultrasonic welding units each having at least an anvil and a sonotrode, and in that each dust suction unit comprises a suction nozzle to extract dust particles from the open cut edges above a hole in each package sleeve during the ultrasonic welding of the spout elements onto the package sleeves.

These objects are also reliably solved a method for extracting cardboard fibers or dust particles from the open cut edges at the top and/or the bottom of package sleeves in a filling machine, according to claim 13, comprising the following steps:
- providing the filling machine with ultrasonic welding systems, each having an anvil and a sonotrode, and with an extraction system,
- moving the anvil and/or the sonotrode of each bottom/top sealing unit from a standby position into a working position to achieve a contact with bottom/top seam surfaces to be sealed,
- ultrasonic welding of the bottom seam and/or the top seam, and
- moving the welding components and suction nozzles back to their standby positions.

In case that also spout elements should be attached onto the package sleeves, the objects are also reliably solved by a method for extracting cardboard fibers or dust particles from the open cut edges at the top of package sleeves in a filling machine, according to claim 14, comprising the following steps:
- providing the filling machine with an ultrasonic welding system having an anvil and a sonotrode and with an extraction system having at least one suction nozzle,
- applying a spout element onto each package sleeve by inserting from the inside of the package sleeve through a hole,
- moving the sonotrode of each sealing unit from a standby position into a working position to achieve a contact with the sealing area of the spout element and with the package sleeve around the hole,
- ultrasonic welding of the spout element to the package sleeve, and
- moving the sonotrode back to its standby position.

The invention has recognized that providing special extraction devices for the bottom and top sealing stations, or, if applicable, for a spout application station, of a filling machine allows to reliably prevent cardboard fibers and dust particles from the open cut edges of the package sleeves being swirled around by the vibrations during any ultrasonic sealing and distributed in the filling machine.

With the present invention, the extraction of dust takes place directly at the respective sealing station, i.e., when sealing the bottom or top of the package and when sealing the spout onto the package sleeve. In both cases, the extraction system is designed so that the nozzle encapsulates the sealing area as completely as possible from the environment and all particles are extracted.

The different generic types of welding during package manufacturing are as follows.

### Bottom and top sealing:

For each package made from a package sleeve, it is always necessary to seal the bottom or top of the package. In both cases, the anvil and sonotrode are moved towards each other and, together with the suction nozzle, form a closed space to optimize the suction of any cardboard particles. The extracted air is suctioned via a suction channel and through a hollow shaft inside the filling machine.

Spout sealing:

If a spout element needs to be applied to a package sleeve, it needs to be welded onto the outer surface of the package sleeve. In case that the package sleeve has a punched hole as an opening for a spout element, the spout element needs to be inserted through said hole from the inside of the package sleeve and the flange of the spout needs to be sealed with the package sleeve. Preferably, the spout element is sealed by a sonotrode having a tubular cavity for inserting the cap of the spout element with an air gap around the cap. To ensure maximum accessibility and good sealing during the sealing process, the sonotrode is mounted on a carriage which is movable from a standby position into a working position of the sonotrode.

To achieve this, in a preferred embodiment, the filling machine further comprises a spout application station for applying spout elements onto the package sleeves, wherein said spout application station comprises ultrasonic welding units each having at least an anvil and a sonotrode, in that each dust suction unit comprises a suction nozzle to extract dust particles from the open cut edges above a hole in each package sleeve during the ultrasonic welding of the spout elements onto the package sleeves.

According to another preferred embodiment, each suction nozzle can be moved from a standby position to a working position close to the open cut edges of the package sleeves during ultrasonic welding in order to ensure a reliable extraction of the fibers or dust particles.

According to a further teaching of the present invention, the filling machine comprises a plurality of parallel tracks. Even with filling machines with 6, 8 or more tracks, the dust extraction devices may be realized due to their small size and small required volume. Therefore, it is even possible to accomplish that the parallel tracks have a common aseptic zone in the region of the bottom sealing station and/or the top sealing station.

Advantageously, according to a first - preferred - embodiment, in each dust suction unit arranged at the bottom sealing station and/or top sealing station and/or spout application station of the filling machine the suction nozzle is arranged at the anvil of the ultrasonic welding unit. This allows the suction nozzle to be moved from a standby position to a working position at the same time as the anvil is moved.. However, alternatively it is also possible that in each dust suction unit of the filling machine the suction nozzle is arranged at the anvil or the sonotrode of the ultrasonic welding unit.

Another preferred arrangement claims that the suction nozzles are operatively connected to a central pump unit via suction lines. Preferably, in each dust suction unit arranged at the bottom sealing station of the filling machine the suction line ends in a hollow shaft, and in the axis of the hollow shaft is also the swivel axis of the anvil and the sonotrode of the ultrasonic welding unit. This makes it possible to collect and dispose all the fiber dust from the open cut edges of the processed packaging sleeves centrally in the filling machine. The same construction is applicable generally also for a top sealing station. Here, the dust suction units need to be arranged above the open cut edges of the top of the package body. This solution is very simple in construction and space-saving at the same time.

In case of sealing a spout element, another embodiment of the present invention provides that each suction nozzle arranged at the spout application station of the filling machine comprises a sealing element, which is movably mounted on a sonotrode carriage. Such a sealing element leads to an encapsulated suction zone above the open cut edges of the top of the package and therefore to a reliable extraction of the unwanted particles.

Wherein the sonotrode carriage can be moved from a standby position to a working position of the sonotrode, the sealing element is moved relative to the suction nozzle firmly attached to the anvil of the ultrasonic welding unit. When the sealing element is in close contact with the anvil, the suction area is encapsulated as tightly as possible from the environment so that all loose particles which emerge from the upper edge of the package sleeve during ultrasonic sealing of the spout element are reliably extracted. Depending on the respective geometric conditions, the sealing element can be moved up to a required distance relative to the nozzle body.

Again, also in the spout application station, the suction nozzles of each dust suction unit are operatively connected to a central pump unit via suction lines.

In order to be able to work each individual step of the method for extracting cardboard fibers or dust particles from the open cut edges of the package sleeves with repeatable accuracy, the transport of the package sleeves introduced in the filling machine up to the discharging of the finished packages is carried out cyclically in steps. To achieve a high throughput, the transport paths should therefore be as short as possible to achieve a fast cycle time.

The invention will be explained in more detail below with the aid of a drawing which merely represents a preferred exemplary embodiment, in which:
- Figs. 1A-F: show different states of package manufacturing during the production of a package starting from a blank of package material, a package sleeve, which is formed from such a blank in a flat-folded state, in a partially unfolded state, in the completely unfolded state with a spout element applied thereto, and a package manufactured from such a package sleeve in the filled and closed state, ready for sale,
- Fig. 2: shows a preferred embodiment of a filling machine according to the invention in a schematic side view,
- Fig. 3: shows a sequence of individual steps or stations of the manufacturing method,
- Fig. 4: shows an enlarged section of a bottom sealing station of the filling machine, in a perspective view,
- Fig. 5: shows the sealing elements for welding of the bottom seam in their closed (working) position, in a vertical section,
- Fig. 6: shows the sealing elements of Fig. 5 in their standby position, in a vertical section,
- Fig. 7: shows an enlarged section of a spout application station of the filling machine, in a perspective view,
- Figs. 8A-D: show the individual steps of the spout applicator station of Fig. 7 in chronological order, each in a vertical section, in Fig. 8C partially enlarged,
- Fig. 9: shows an enlarged section of the suction nozzle shown in Figs. 8A and 8B, with the sonotrode in its standby position, in a perspective view,
- Fig. 10: shows the suction nozzle of Fig. 8C in the working position of the sonotrode, in a perspective view, and
- Fig. 11: shows the suction nozzle of Fig. 9 in a perspective view from below.

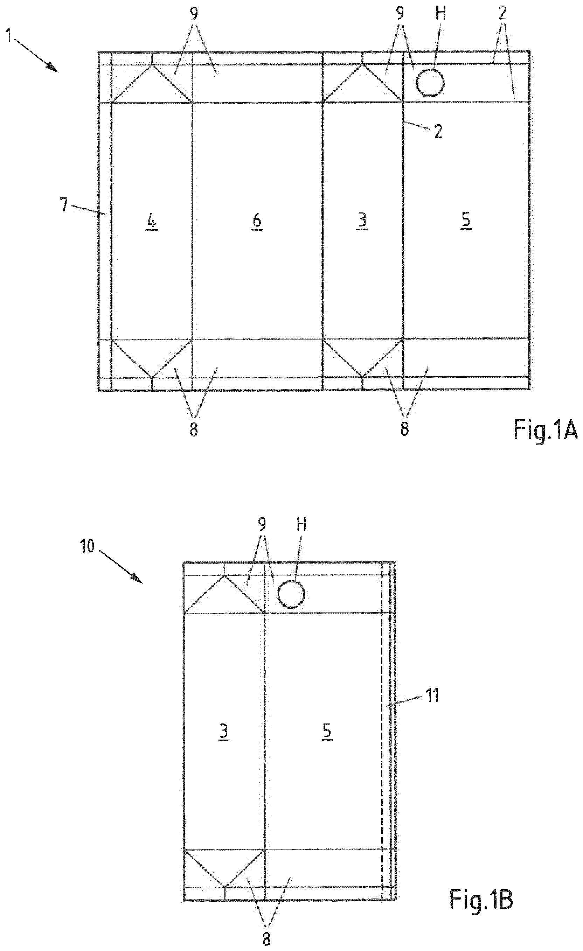

Fig. 1A represents a blank 1 known from the prior art, from which a package sleeve may be formed. The blank 1 may comprise a plurality of layers of different materials, for example paper, paperboard, plastic, or metal, in particular aluminium. The blank 1 has a plurality of fold lines 2, which are intended to facilitate the folding of the blank 1 and which divide the blank 1 into a plurality of surfaces.

The blank 1 may be divided into a first side surface 3, a second side surface 4, a front surface 5, a rear surface 6, a sealing surface 7, bottom surfaces 8 and gable surfaces 9. A package sleeve 10 may be formed from the blank 1 by folding the blank 1 in such a way that the sealing surface 7 can be connected, particularly welded, to the front surface 5. A round hole H is represented in the region of a spout element (not shown) to be sealed at a later stage.

Fig. 1B shows a package sleeve 10 in the flat-folded state. The regions of the package sleeve 10 which have already been described in connection with Fig. 1A are provided with corresponding references in Fig. 1B. The package sleeve 10 is formed from the blank 1 shown in Fig. 1A. For this purpose, the blank 1 has been folded in such a way that the sealing surface 7 and the front surface 5 are arranged overlapping, so that the two surfaces can be welded together over their surfaces. A longitudinal seam 11 is obtained as a result.

In Fig. 1B, one side surface 4 (concealed in Fig. 1B) lies underneath the front surface 5, while the other side surface 3 lies on the rear surface 6 (concealed in Fig. 1B). In the flat-folded state, a plurality of package sleeves 10 may be stacked in a particularly space-saving manner. The flat-folded package sleeves 10 are therefore often stacked at the place of manufacturing and transported in stacked form to the place of filling.

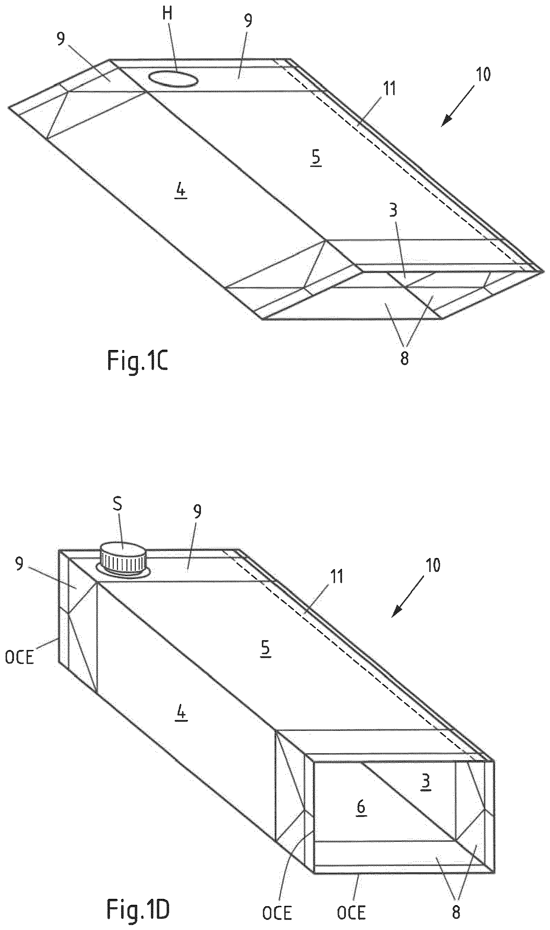

Only then are the packaging sleeves 10 unstacked and unfolded so that they can be filled with contents, for example with pourable foodstuffs. Fig. 1C shows the package sleeve 10 of Fig. 1B in a partially unfolded state. It can easily be seen that the package sleeve 10 has surrounding open cut edges OCEs both on its top and its bottom side as well as inside the hole H.

Fig. 1D shows the package sleeve 10 of Fig. 1C in a completely unfolded state. In this state, a spout element S has been already applied onto the package sleeve 10 after having been inserted into the hole H (no longer visible here) from the inside of the package sleeve 10 and, for example, welded to the package material by means of ultrasonics. For this purpose, it must be possible to move the anvil of the sealing device into the unfolded interior of the package sleeve 10 in order to perform the ultrasonic welding together with the sonotrode coming from the outside. In the exemplary embodiment shown, the spout element S is provided with a screw cap which, on the one hand, allows initial opening of the (subsequently) filled package and can furthermore be used to reclose such a package.

Moreover, the regions of the package sleeve 10 which have already been described in connection with Fig. 1A or Fig. 1B are provided with corresponding references. The unfolded state refers to a configuration in which an angle of about 90° is formed between the two respectively adjacent surfaces 3, 4, 5, 6, so that the package sleeve 10 - depending on the shape of these surfaces - has a square or rectangular cross section. Accordingly, the opposite side surfaces 3, 4 are arranged parallel to one another. The same applies for the front surface 5 and the rear surface 6.

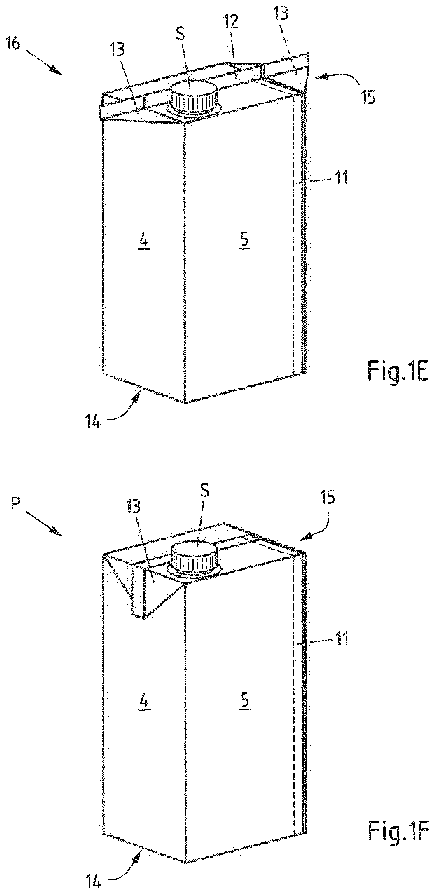

Fig. 1E shows a package body 16 manufactured from the package sleeve 10 of Fig. 1D in the (subsequently) filled and closed state. After closure, a fin seam 12 is created in the region of the bottom surface 14 and in the region of the gable surfaces at the top 15. In addition, protruding regions of excess material, which are also referred to as "ears" 13, are formed in the edge regions of the bottom surfaces 8 and the gable surfaces 9. In Fig. 1E, the fin seams 12 and the ears 13 protrude. In Fig. 1F, both the fin seams 12 and the ears 13 have been applied, for example by hot air sealing. The - upper - ears 13 created by the gable surfaces 9 are applied onto the side surfaces 3, 4, while the - lower - ears 13 created by the bottom surfaces 8 are applied onto the lower side of the package sleeve 10. In Fig. 1F, a finished package P is therefore shown in a state ready for sale.

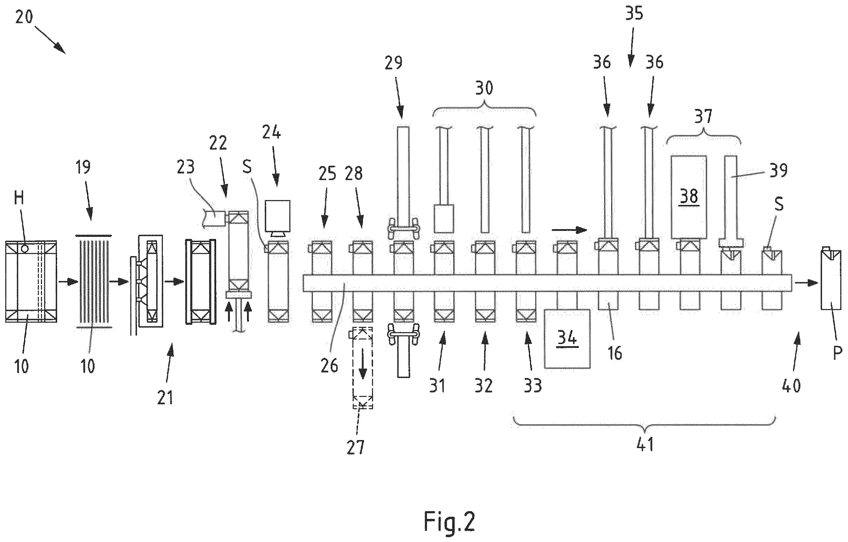

Fig. 2 shows - schematically - a filling machine 20 in a side view. Individual package sleeves 10 are taken of a stack 19 of package sleeves 10 and are slightly unfolded. Thereafter, the package sleeves 10 are transferred to an unfolding station 21 of the actual filling machine 20. However, the package sleeves 10 could also be unfolded beforehand so that no unfolding station 21 is required. The package sleeves 10 are then lifted into a spout application station 22, provided with a spout element S by means of an ultrasonic sealing unit 23 known per se and lowered again. In the next, optional, position, an optical sensor system 24 checks if the package sleeve 10 provided with the spout element S for possible defects. The package sleeve 10 is then taken over in a transfer station 25 by a transport device 26. If required, an ejection station 28 can also be provided for ejecting defective package sleeves 27 that have not been correctly transferred or sleeves with a missing or incorrectly sealed spout element S.

Subsequently, a pre-folding station 29 is provided, in which both the bottom 14 and the top 15 of the carton sleeves 10 are pre-folded. The package sleeves 10 are then sterilized in a sterilization station 30. In the exemplary embodiment shown, the sterilization station 30 has three sub stations, namely a hot air station 31 for preheating the package sleeves 10 that are still open at the bottom, a sterilizing agent station 32 for sterilizing the package sleeves by injecting a sterilizing agent and a drying station 33 for drying the sterilized package sleeves. However, the hot air station 31 is not necessary in any case.

Thereafter, the bottom sealing takes place in a bottom sealing station 34, whereby the ears formed thereby are sealed from below onto the closed bottom 14 of the package bodies 16 formed by the bottom sealing station 34. After filling the package body 16 in a subsequent filling station 35, which can take place in single subsequent steps, in two filling units 36 in the present embodiment. The now filled package body 16 passes through a top sealing station 37 for forming and sealing the top 14 of the package body 16, which can also be regarded as the gable of the package body 16. Initially, the top seam is sealed in a gable seam station 38. Then, the thereby formed ears 13 are sealed to the side surfaces 3, 4 in an ear sealing station 39, resulting in the finished package P, which is discharged at the end of the transport device 26 via a discharging station 40, particularly in a horizontal direction.

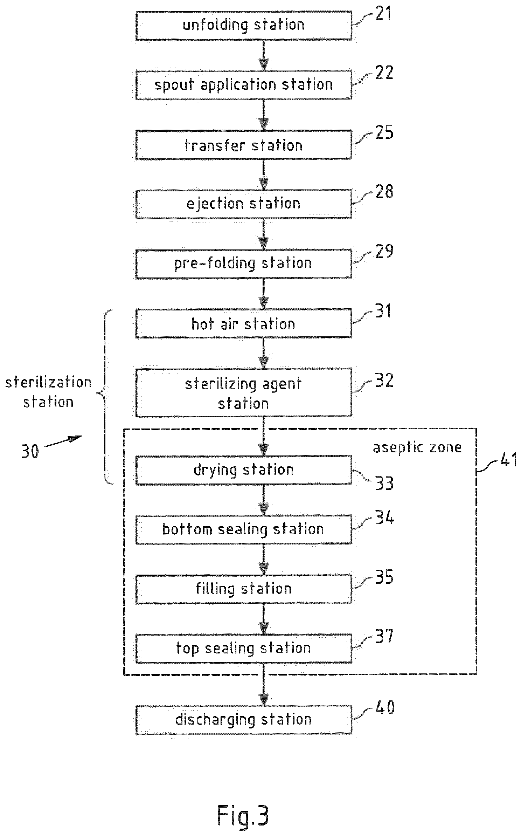

As shown in Fig. 3, the essential working steps are shown diagram-like, as well as the stations mentioned before, from the unfolding of the package sleeves 10 to the closing of the top 15 of the package bodies 16 taking place in an aseptic zone 41.

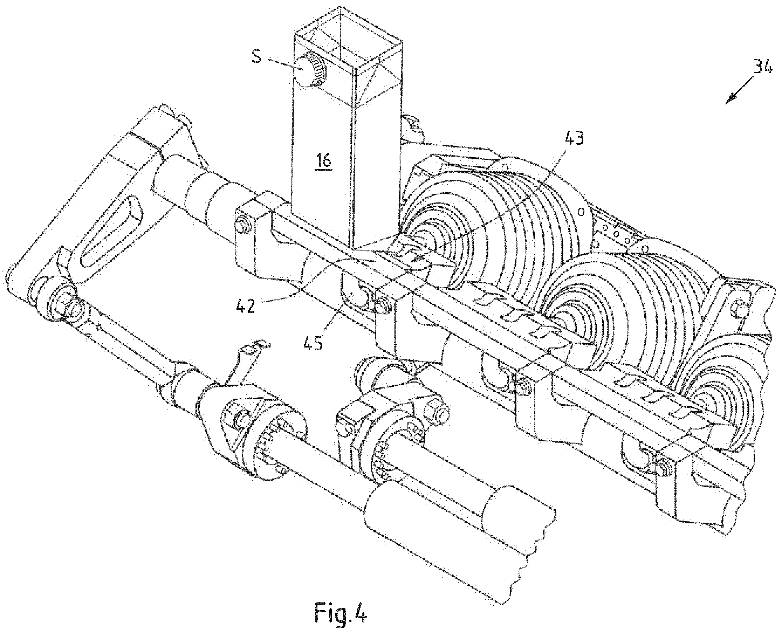

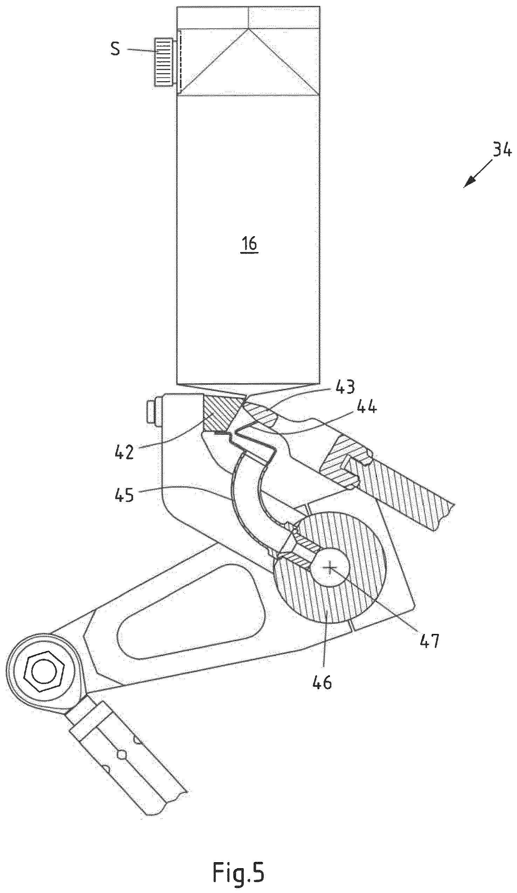

Fig. 4 shows a perspective view of an enlarged section of the bottom sealing station 34 of the filling machine 20 in a cut-out illustration. For a better understanding, just one package body 16 has been shown in the track on top of Fig. 4. In this representation, anvil 42 and sonotrode 43 are depicted in their working position. Here, the bottom fin seam (not recognizable) is clamped between anvil 42 and sonotrode 43, which are more clearly recognizable in Fig. 5 showing a vertical section in the plane through the package body 16.

Fig. 5 shows that the fin seam between anvil 42 and sonotrode 43 has open cut edges directing downwards. Therefore, cardboard fibers or dust particles which might be whirled around during the ultrasonic welding process from the open cut edges of the package body 16 could enter the filling machine 20. To reliably avoid this, a suction nozzle 44 is arranged under the fin seam. The design of its suction opening ensures a good seal of the space between anvil 42 and sonotrode 43 and, consequently, allows a reliable extraction of these unwanted particles. Fig. 5 shows further that the suction nozzle 44 ends in a suction line 45, which in turn leads into the inside of a hollow shaft 46.

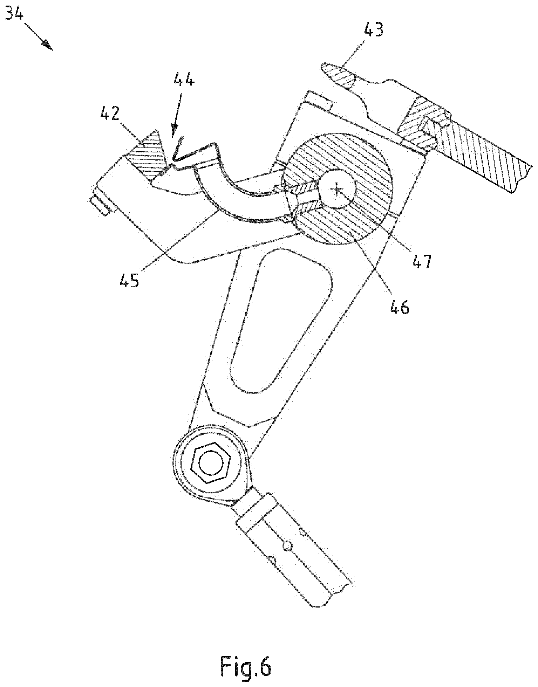

In Fig. 6, the arrangement of anvil 42 and sonotrode 43 is shown in their standby position. Here, it can be clearly seen that the suction nozzle 44 and the suction line 45 are connected to the anvil 42. This design has the further advantage that the suction nozzle 44 is pivoted with the movement of the driven anvil 42. In this preferred embodiment, the axis 47 of the hollow shaft 46 is also the swivel axis of the anvil 42, while the sonotrode 43 is shown in a retracted position.

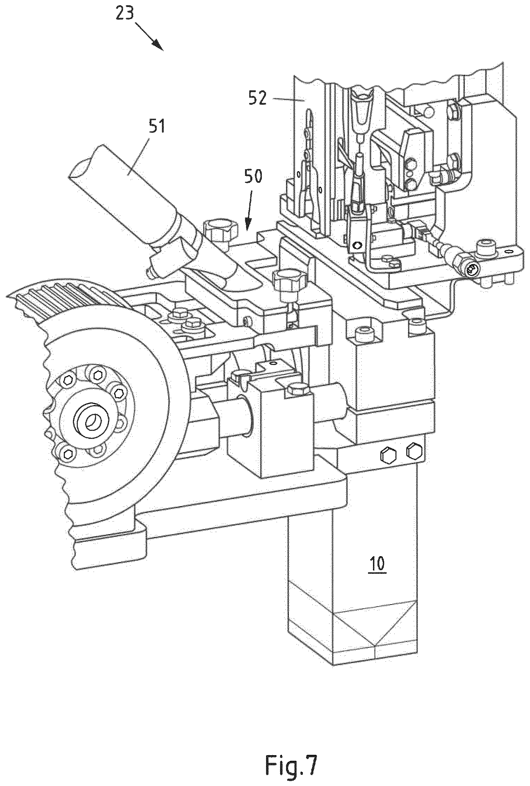

Fig. 7 shows the ultrasonic sealing unit 23 of the spout application station 22 of the filling machine 20 in a cut-out illustration and perspective view. Here only one track is illustrated for a better comprehension. A package sleeve 10 is shown, the top of which is however concealed. In this position, a spout element S (not shown) is sealed with its circumferential flange against the inner surface of the package sleeve 10 after having been inserted through the hole H (not visible) from the inside of the package sleeve 10.

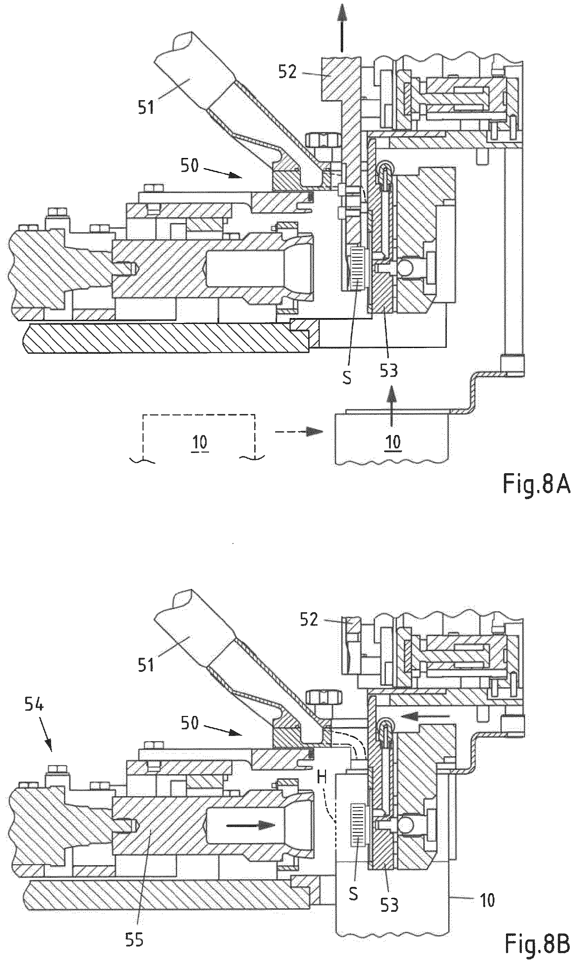

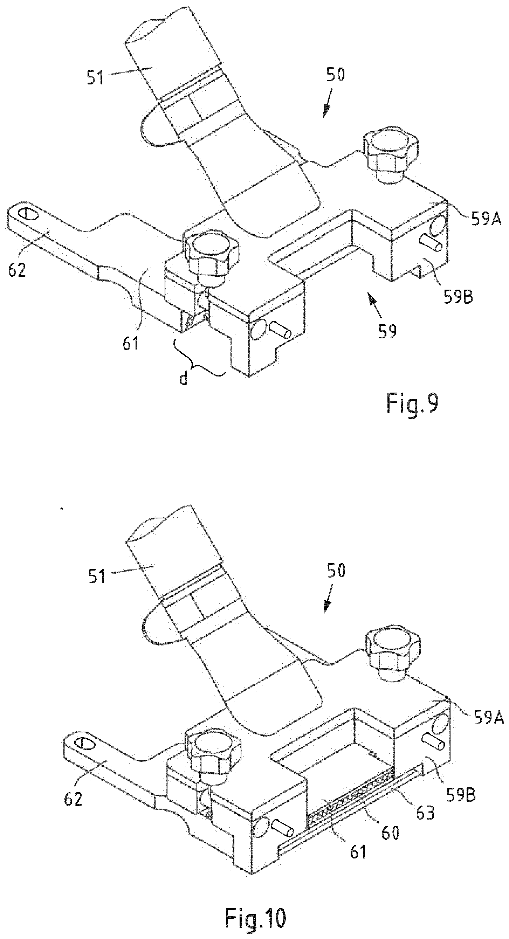

For better clarity, Fig. 8A shows the spout sealing station of Fig. 7 in a vertical section. Here, a suction nozzle 50 can be seen, the suction channel of which ends in a (cut-off) suction line 51. In Fig. 8A, a spout feeder 52 is shown in its lowered state after a spout element S has been fed into position. The two arrows show the common vertical movement of the spout feeder 52 and the package sleeve 10 in the next step, which is shown in Fig. 8B. The spout feeder 52 dives "through" the suction nozzle 50, which is firmly attached to the anvil 53. To make this possible, the suction nozzle 50 has a C-shaped design to have enough space for the spout feeder 52, which is explained in more detail further below regarding Fig. 9.

In Fig. 8B, the package sleeve 10 is shown in its upward position and, in the next step, the anvil 53 with the spout element S in place moves horizontally in the direction of the arrow to insert the spout element S through the hole H (dotted line) to bring its flange into contact with the inner surface of the package sleeve 10. On the left side of Figs. 8A and 8B a sonotrode carriage 54 is shown that holds a sonotrode 55. During the horizontal movement of the anvil 53, also the sonotrode carriage 54 together with the sonotrode 55 moves horizontally along the arrow in the direction of the anvil 53.

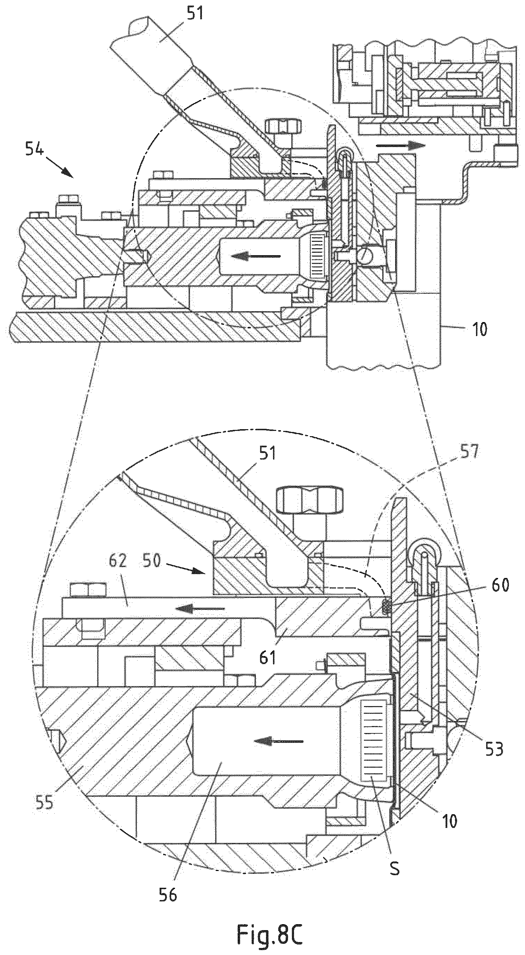

Fig. 8C shows as next state both anvil 53 and sonotrode 55 in their working position, partially enlarged. The suction nozzle 50 is attached to the anvil 53 (as can be seen also in Figures 8A and 8B). One can see that the sonotrode 55 comprises a tubular cavity 56 open to the direction of the anvil 53. At its open end, the cavity 56 has a widening, the dimensions of which are slightly larger than the cap of the spout element S. This allows a firm contact between the annular end of the sonotrode 55 and the package material of the package sleeve 10 around the spout element S and, therefore, a firm welding of the flange of the spout element S to the inner surface of the package sleeve 10 is achieved. There is an air gap between the sonotrode 55 and the cap of the spout element S due to the shape of the tubular cavity 56 inside the sonotrode 55.

Above the hole H in the package sleeve 10 the open cut edge OCE of the package sleeve 10 is completely free at the top of the spout element S. Here, cardboard fibers or dust particles might be whirled up out of this open cut edge of the package sleeve 10 during the ultrasonic welding of the spout element S. To prevent this, the suction nozzle 50 is located above the package sleeve 10.

Inside the top of the suction nozzle 50 there is a suction channel 57 which ends in outlets 58 ending at the bottom of a nozzle body 59, which includes a top part 59A and a bottom part 59B. The exact structure and the function of the suction nozzle 50 are shown in Figures 9, 10 and 11 and are described later in more detail. As stated already above, the suction nozzle 50 is firmly attached to the anvil 53. Under the bottom part 59B of the suction nozzle 50 there is a sealing member 61 having sealing elements 60. For an ideal extraction, the sealing elements 60 are located at the face side of the nozzle body 59 and are pressed against the anvil 53 during the ultrasonic welding process, as can best be seen in the enlarged portion of Fig. 8C. This ensures that no air is extracted from above. The sealing member 61 is mounted to the sonotrode carriage 54 via connecting arms 62. After the welding process is finished, both the sonotrode 55 and the sealing member 61 move horizontally away from the anvil 53 in the direction of the arrows in Fig. 8C.

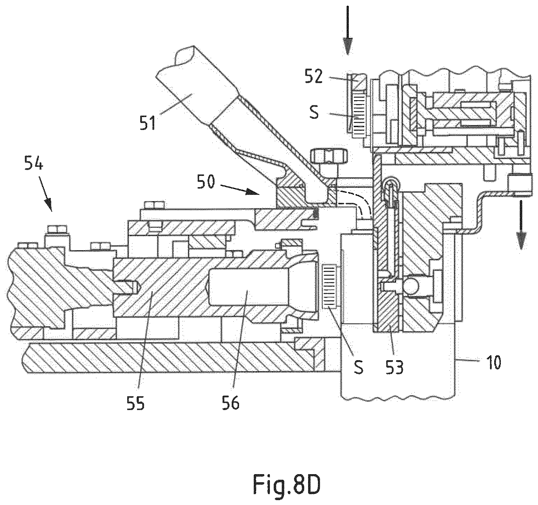

Finally, Fig. 8D shows the sonotrode carriage 54 in the standby position of the sonotrode 55. The spout element S is firmly sealed to the package sleeve 10, which then is moved downwards in the direction of the arrow. Simultaneously, the spout feeder 52 is lowered to feed the next spout element S for the subsequent ultrasonic welding process. After this movement, the initial state shown in Fig. 8A is reached again.

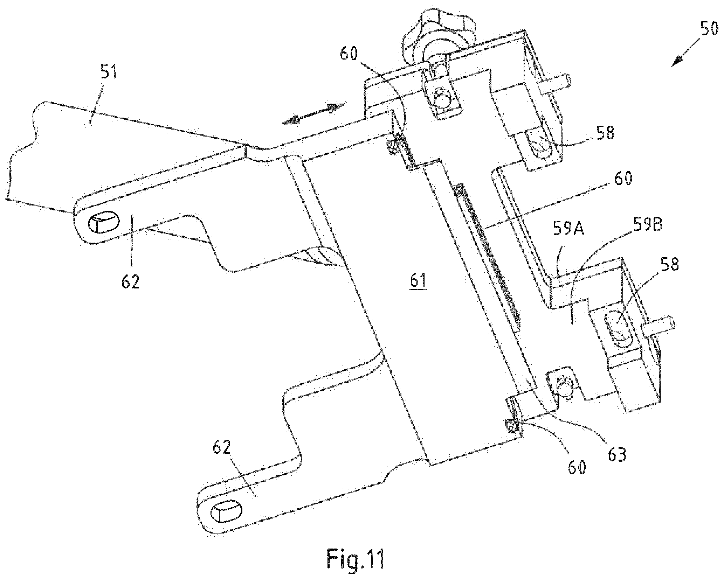

The function of the suction nozzle 50 is best described in separate views which is shown in Figures 9 and 10 in a perspective view from above. The illustration of the suction nozzle 50 in Figures 9 and 10 reminds of a vacuum cleaner nozzle and also the function thereof is indeed similar. It is clearly shown in Fig. 9 that the top part 59A and the bottom part 59B of nozzle body 59 give the suction nozzle 50 a C-shaped design. The reason for this is that the free space inside the 'C' is needed for feeding the next spout element S downwards by the spout feeder 52. Inside the protruding legs of the C-shaped nozzle body 59, a suction channel 57, coming from the suction line 51, branches into two individual lines (not visible), and each line ends in a slotted hole 58 on the underside, as can be clearly seen in Fig. 11, a perspective view from below, which has been added to better explain the special design of both the suction nozzle 50 and the sealing member 61.

When the sonotrode carriage 54 moves horizontally from the standby position to the working position, also the sealing member 61 moves horizontally up to a distance d, as can be seen in Fig. 9. In Fig. 10 (the working position), the open space inside the 'C' is closed by the sealing member 61 and sealed by the sealing elements 60. Additionally, a protruding web 63, which is best visible in Fig. 11 and, without numeral, also in the enlarged part of Fig, 8C, reduces the size of the gap under the sealing element 60. However, neither the sealing elements 60 nor the protruding web 63 touch the surface of the package sleeve 10. This configuration ensures that all particles being swirled out of the open cut edge are reliably removed.

### List of reference signs

- H:: hole
- OCE:: open cut edge
- P:: package
- S:: spout element
- d:: distance
- 1:: blank
- 2:: fold line
- 3, 4:: side surfaces
- 5:: front surface
- 6:: rear surface
- 7:: sealing surface
- 8:: bottom surface
- 9:: gable surface
- 10:: package sleeve
- 11:: longitudinally seam
- 12:: fin seam
- 13:: ears
- 14:: bottom
- 15:: top
- 16:: package body
- 17, 18:: (not assigned)
- 19:: stack
- 20:: filling machine
- 21:: unfolding station
- 22:: spout application station
- 23:: ultrasonic sealing unit
- 24:: optical sensor system
- 25:: transfer station
- 26:: transport device
- 27:: defective package sleeve
- 28:: ejection station
- 29:: pre-folding station
- 30:: sterilization station
- 31:: hot air station
- 32:: sterilizing agent station
- 33:: drying station
- 34:: bottom sealing station
- 35:: filling station
- 36:: filling unit
- 37:: top sealing station
- 38:: gable seam station
- 39:: ear sealing station
- 40:: discharging station
- 41:: aseptic zone
- 42:: anvil
- 43:: sonotrode
- 44:: suction nozzle
- 45:: suction line
- 46:: hollow shaft
- 47:: swivel axis
- 50:: suction nozzle
- 51:: suction line
- 52:: spout feeder
- 53:: anvil
- 54:: sonotrode carriage
- 55:: sonotrode
- 56:: cavity
- 57:: suction channel
- 58:: outlet
- 59:: nozzle body
- 59A:: top part
- 59B:: bottom part
- 60:: sealing member
- 61:: sealing element
- 62:: connecting arm
- 63:: protruding web

## Claims

1. A filling machine (20) for filling pourable food products into package bodies (16) made from package sleeves (10) closed at the bottom, comprising:
- a transport device (26) for conveying the package sleeves (10) and package bodies (16) along a transport direction,
- a sterilization station (30),
- a bottom sealing station (34),
- a filling station (35) with filling nozzles (36) for filling pourable food products into the package bodies (16), and
- a top sealing station (37),
wherein the bottom sealing station (34) and/or the top sealing station (37) comprise ultrasonic welding units each having at least an anvil (42) and a sonotrode (43),
**characterized in that**
the filling machine (20) further comprises an extraction system with at least one or more dust suction units for extracting cardboard fibers or dust particles from open cut edges (OCE) of the package sleeves (10) and/or package bodies (16) during ultrasonic welding of the bottom seam and/or the gable seam, and **in that** each dust suction unit comprises a suction nozzle (44).

2. A filling machine (20) for filling pourable food products into package bodies (16) made from package sleeves (10) closed at the bottom, comprising:
- a transport device (26) for conveying the package sleeves (10) and package bodies (16) along a transport direction,
- a sterilization station (30),
- a bottom sealing station (34),
- a filling station (35) with filling nozzles (36) for filling pourable food products into the package bodies (16), and
- a top sealing station (37),
**characterized in that**
the filling machine (20) comprises a spout application station (22) for applying spout elements (S) onto the package sleeves (10), **in that** the filling machine (20) further comprises an extraction system with at least one or more dust suction units for extracting cardboard fibers or dust particles from open cut edges (OCE) of the package sleeves (10) and/or package bodies (16) during ultrasonic welding of the spout elements (S), wherein the spout application station (22) comprises ultrasonic welding units each having at least an anvil (53) and a sonotrode (55), and **in that** each dust suction unit comprises a suction nozzle (50) to extract dust particles from the open cut edges (OCE) above a hole (H) in each package sleeve (10) during the ultrasonic welding of the spout elements (S) onto the package sleeves (10).

3. A filling machine (20) according to claim 1 or 2,
**characterized in that**
each suction nozzle (44, 50) can be moved from a standby position to a working position close to the open cut edges (OCE) of the package sleeves (10) during ultrasonic welding.

4. A filling machine (20) according to any one of claims 1 to 3,
**characterized in that**
the filling machine (20) comprises a plurality of parallel tracks.

5. A filling machine (20) according to Claim 4,
**characterized in that**
the parallel tracks have a common aseptic zone (41) in the region of the bottom sealing station (34) and/or the top sealing station (37).

6. A filling machine (20) according to any one of claims 1 to 5,
**characterized in that**
in each dust suction unit arranged at the bottom sealing station (34) and/or top sealing station and/or spout application station (22) of the filling machine (20) the suction nozzle (44, 50) is arranged at the anvil (42, 53) of the ultrasonic welding unit.

7. A filling machine according to any one of claims 1 to 5,
**characterized in that**
in each dust suction unit of the filling machine the suction nozzle is arranged at the anvil or the sonotrode of the ultrasonic welding unit.

8. A filling machine (20) according to claim 6 or 7,
**characterized in that**
the suction nozzles (44) are operatively connected to a central pump unit via suction lines (45).

9. A filling machine (20) according to any of the claims 1 to 8,
**characterized in that**
in each dust suction unit arranged at the bottom sealing station (34) of the filling machine (20) the suction line (45) ends in a hollow shaft (46), and **in that** the axis of the hollow shaft (46) is also the swivel axis of the anvil (42) and the sonotrode (43) of the ultrasonic welding unit.

10. A filling machine (20) according to any one of claims 2 to 9,
**characterized in that**
each suction nozzle (50) arranged at the application station (22) of the filling machine (20) comprises a sealing element (61), which is movably mounted on a sonotrode carriage (54).

11. A filling machine (20) according to claim 10,
**characterized in that**
the sonotrode carriage (54) can be moved from a standby position to a working position of the sonotrode (55).

12. A filling machine (20) according to claim 10 or 11,
**characterized in that**
the sealing element (61) can be moved up to a distance (d) relative to the suction nozzle (50) arranged at the anvil (53) of the ultrasonic welding unit.

13. A method for extracting cardboard fibers or dust particles from the open cut edges (OCE) at the top and/or the bottom of package sleeves (10) in a filling machine (20) according to claims 1 to 12, comprising the following steps:
- providing the filling machine (20) with ultrasonic welding systems, each having an anvil (42) and a sonotrode (43), and with an extraction system,
- moving the anvil (42) and/or the sonotrode (43) of each bottom/top sealing unit from a standby position into a working position to achieve a contact with bottom/top seam surfaces to be sealed,
- ultrasonic welding of the bottom seam and/or the top seam, and
- moving the welding components (42, 43) and suction nozzles (44) back to their standby positions.

14. A method for extracting cardboard fibers or dust particles from the open cut edges (OCE) of package sleeves (10) in a filling machine (20) according to claims 2 to 12 with an extraction system with at least one dust suction unit, comprising the following steps:
- providing the filling machine (20) with an ultrasonic welding system having an anvil (53) and a sonotrode (55) and with an extraction system having at least one suction nozzle (50),
- applying a spout element (S) onto each package sleeve (10) by inserting from the inside of the package sleeve (10) through a hole (H),
- moving the sonotrode (55) of each sealing unit from a standby position into a working position to achieve a contact with the sealing area of the spout element (S) and with the package sleeve (10) around the hole (H),
- ultrasonic welding of the spout element (S) to the package sleeve (10), and
- moving the sonotrode (55) back to its standby position.

15. A method according to claim 13 or 14,
**characterized in that**
the transport of the package sleeves (10) introduced in the filling machine (20) up to the discharging of the finished packages (P) is carried out cyclically in steps.
